# EUROPEAN PATENT SPECIFICATION

(11) **EP 2 676 039 B1**
(45) Date of publication and mention of the grant of the patent: **29.08.2018**
(21) Application number: 11858816.9
(22) Date of filing: 18.02.2011
(51) Int. Cl.: F16B 7/04, F16K 31/00

(54) **CONNECTION MECHANISM, VALVE, AND ACTUATING MECHANISM**
VERBINDUNGSMECHANISMUS, VENTIL UND BETÄTIGUNGSMECHANISMUS
MÉCANISME DE CONNEXION, SOUPAPE, ET MÉCANISME D'ACTIONNEMENT

(43) Date of publication of application: 25.12.2013
(73) Proprietor: Siemens Schweiz AG, 8047 Zürich (CH)
(72) Inventor: HAGMANN, Stefan, 6344 Meierskappel (CH); GUO, Feile, Beijing 102621 (CN); ZHANG, Ping, Beijing 100068 (CN); YAO, Yuchao, Tianjin, Jinghai County 301608 (CN); ZHAN, Ning, Beijing 100043 (CN); WANG, Jianhui, Beijing 100102 (CN)
(74) Representative: Maier, Daniel Oliver
(86) International application number: PCT/CN2011/071109
(87) International publication number: WO 2012/109800

(56) References cited:
- EP-A1- 0 786 612
- CN-A- 1 748 088
- CN-Y- 201 007 382
- DE-A1- 3 439 814
- US-A- 5 082 391
- US-A1- 2004 155 216
- US-A1- 2004 216 888
- US-A1- 2006 208 211

## Description

### BACKGROUND OF THE INVENTION

### Field of the Invention

The present invention relates to a connection mechanism, a valve, and an actuating mechanism, and more particularly to a connection mechanism for conveniently connecting other components, and a valve and an actuating mechanism in cooperation with the connection mechanism.

### Related Art

An actuating mechanism (also called an actuator) is generally connected with a valve to control a flow of a fluid, a connection mechanism usually needs to be disposed between the actuating mechanism and the valve for coupling, to assemble the actuating mechanism and the valve into an entirety, so as to relatively fix the actuating mechanism and the valve and transfer a power or a torque.

US 2004/216888 A1 discloses an apparatus for coupling a choke and an actuator. The apparatus comprises a selectably removable coupling device coaxially aligning a distal end of a reciprocating linear acting actuator shaft and a proximal end of a choke stem or a choke stem extension member. The axial reciprocation of the actuator shaft reciprocates the coupling device in the interface housing thereby moving the choke stem.

US 2006/208211 A1 discloses a packing follower for use with a valve. The follower comprises a first member including a first portion of a flange and a first portion of a curved wall extending substantially perpendicularly from the first portion of the flange to define a first portion of a cylindrical member. It further comprises a second member separable from the first member and including a second portion of the flange and a second portion of second portion of the flange to define a second portion of the cylindrical member, wherein the first and second members include complementary interlocking structures configured to mechanically couple the first and second members to form the packing follower.

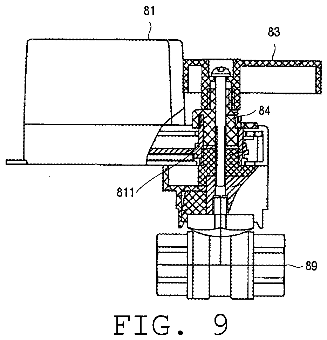

As shown in FIG. 9, in the utility model of China with the application number of 200620105782.6, a connection mechanism for an actuator 81 and a valve 89 is disclosed, which includes a handle 83 and a connection shaft 84 for connecting the handle 83 and an output shaft sleeve 811 of the actuator, and further includes a lower connection body and a transmission component in the connection body, and the valve 89 is detachably connected with the actuator 81 through the connection body.

It can be seen that, in the prior art, this connection mechanism has a complex structure, and is dismounted inconveniently.

### SUMMARY OF THE INVENTION

The present invention is directed to a connection mechanism for conveniently connecting other components, which can be connected and dismounted conveniently and quickly.

The present invention is further directed to a valve in cooperation with the connection mechanism of the present invention.

The present invention is further directed to an actuating mechanism in cooperation with the connection mechanism of the present invention.

In order to realize the purposes , the present invention provides a connection mechanism for connecting a first component and a second component, and the connection mechanism includes a gripping part, a connection part, and a fixing part.

The gripping part has a first connection portion and a second connection portion, a pair of first through holes is disposed symmetrically on the first connection portion, and a through slot is disposed symmetrically between the first connection portion and the second connection portion.

The connection part has a free end and a fixing end, and the free end passes through the first through hole, so as to limit a radial movement of the connection part.

The fixing part passes through the through slot, one end of the fixing part is fixed on the gripping part, and the other end of the fixing part is used to limit an axial movement of the connection part.

In an embodiment of the present invention, the connection mechanism further includes an elastic part sleeved on the connection part, and when the connection part is drawn out from the first through hole and a hole on the first component, the elastic part can be further continuously sleeved on the connection part, so as to effectively prevent the connection part from being lost accidentally.

In an embodiment of the present invention, a pair of second through holes are disposed symmetrically on the second connection portion, the gripping part can be fixed through bolts, screws, rivets or other components, and meanwhile the second component is also fixed in the gripping part, so as to avoid an axial movement of the second component.

In a further embodiment of the present invention, the fixing part has an elastic protrusion for withstanding the free end of the connection part, to limit the axial movement of the connection part. Due to the elastic protrusion, the connection part can be fixed or released manually or with a simple apparatus.

In an embodiment of the present invention, the free end of the connection part has at least one groove, and when at least a portion of the elastic protrusion is stretched into the groove, the axial movement of the connection part is limited. Due to the obstruction of the groove, the axial movement of the connection part can be better limited, so as to prevent the connection part from falling off due to such causes as vibration.

In an embodiment of the present invention, a diameter of the free end of the connection part decreases gradually along an axial direction, so that the connection part can be conveniently inserted into the first through holes or be drawn out from the first through holes without being obstructed.

In an embodiment of the present invention, the free end of the connection part further has a locking device capable of being unlocked, which on one hand can better prevent the connection part from falling off, and on the other hand can also avoid an improper operation performed on the connection part. Only after the locking device is unlocked through methods such as damage, the connection part can be drawn out.

In an embodiment of the present invention, the fixing end of the connection part is connected with a fixing device, and the fixing device is connected to the first component, the second component, or the grippingpart. In this way, even if the connection part is drawn out, the connection part is not lost accidentally.

In an embodiment of the present invention, the gripping part is detachable, and thus being particularly applicable to a commercially available valve rod of an ordinary valve.

In an embodiment of the present invention, when the first component is connected through the connection part, a distance between an end of the first component and the fixing part is less than a distance of an inclined surface of the free end of the connection part in a direction which is vertical to the axis of the connection part, thus accurate positioning of the first component in the connection mechanism and connection using the connection part is realized conveniently and quickly.

The present invention further provides a valve. The valve has a valve rod, and any one of the connection mechanisms aforementioned is connected on the valve rod. Because the connection mechanism is connected onto the valve rod of the valve, but not mounted on an output shaft of the actuating mechanism, the valve and the actuating mechanism can be very quickly connected together.

The present invention further provides an actuating mechanism including an output shaft, and a long hole is disposed on the output shaft, and is used to connect the connection part of any one of the connection mechanisms aforementioned. When an extending direction of the long hole is vertical to an axial direction of a connection part of a connection structure, and even if the output shaft of the actuating mechanism and a valve rod of a valve are not on one straight line, the connection part can also easily pass through the first through holes and the long hole on the output shaft, and a lateral stress is not generated.

### BRIEF DESCRIPTION OF THE DRAWINGS

The following accompanying drawings are only directed to schematically illustrate and explain the present invention, and do not limit the scope of the present invention. Wherein:
FIG. 1 is a schematic view of a connection mechanism according to an embodiment of the present invention;
FIG. 2 is a schematic view of a connection mechanism connecting two components according to an embodiment of the present invention;
FIG. 3 is a schematic view of another embodiment of a connection mechanism connecting two components according to the present invention;
FIG. 4 is a lateral view of a connection mechanism connecting two components as shown in FIG. 2;
FIG. 5 is a schematic view of an embodiment of a connection part in a connection mechanism according to the present invention;
FIG. 6 is a schematic exploded view of an embodiment of a connection mechanism connecting two components according to the present invention;
FIG. 7 is a schematic view of an embodiment of a valve according to the present invention;
FIG. 8 is a schematic view of an embodiment of an actuating mechanism connected with a valve through a connection mechanism according to the present invention; and
FIG. 9 is a schematic view of a connection mechanism of an actuating mechanism and a valve in the prior art.

### DETAILED DESCRIPTION OF THE INVENTION

In order to more clearly understand technical characters, objectives, and effects of the present invention, specific implementation of the present invention is illustrated with reference to accompanying drawings.

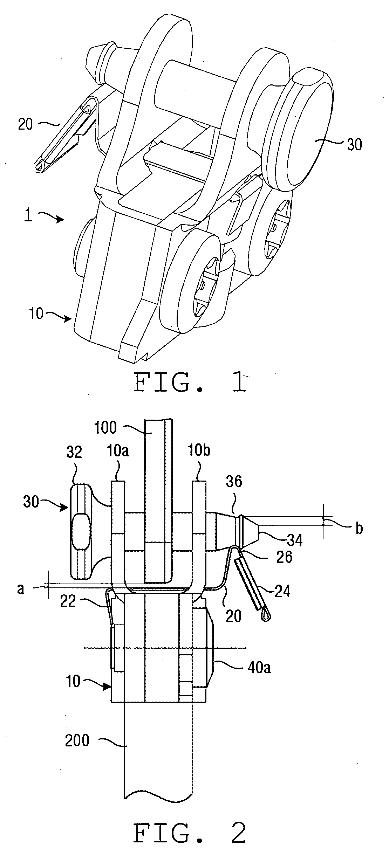

As shown in FIG. 1, an embodiment of the present inventionprovides a connection mechanism 1, which can be used to connect a first component (such as an output shaft of an actuating mechanism) and a second component (such as a valve rod), so as to fix the two components together.

The connection mechanism 1 includes a gripping part 10, a connection part 30, and a fixing part 20. The gripping part 10 grips the second component, then the first component and the gripping part 10 are fixed together with the connection part 30, so that the fixing part 20 can be used to maintain a position of the connection part 30 to prevent the connection part 30 from moving axially, so as to avoid accidental falling off of the connection part 30.

The gripping part 10 can be a detachable structure, for example, the gripping part 10 is formed by assembling two same structures (10a, 10b) with screws, rivets and alike, or, the gripping part 10 is formed by fitting two same structures (10a, 10b) together via deforming or coupling by a special tool without any connecting part involved, and thus being applicable to a commercially available valve rod of an ordinary valve, and definitely, the gripping part 10 can also be a complete structure for gripping and connecting other components.

Hereinafter, the gripping part being two detachable parts is taken as an example, and is illustrated with reference to FIGs. 2, 3, 4 and 6.

The gripping part 10 has a first connection portion 11 and a second connection portion 12, first through holes (13a, 13b) are disposed symmetrically on the first connection portion 11, and a space formed between the first through holes (13a, 13b) can accommodate the first component 100. If a hole 110 is disposed on a corresponding position of the first component 100, the connection part 30 can pass through the first through holes (13a, 13b) and the hole 110 on the first component, so as to fix the first component 100.

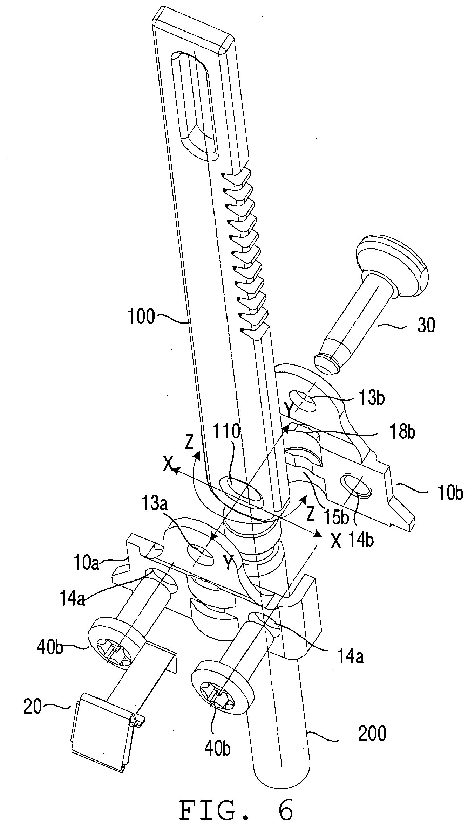

The both detachable parts (10a, 10b) of the gripping part have a depressed portion (only one depressed portion 15a is shown in FIG. 6), and a shape of the depressed portion is adapted to the second component 200. After the two parts are assembled into the gripping part 10, one depressed portion and the other depressed portion are combined to form an accommodation space, and an end portion of the second component 200 can be placed in the space.

Second through holes are also disposed symmetrically at the second connection portion 12 of the gripping part 10, for example, a pair of second through holes (14a, 14b) are disposed laterally and symmetrically. When the end portion of the second component 200 is placed in the accommodation space formed by the depressed portions, then the gripping part 10 is fixed with rivets or other components (40, 40a, 40b), and meanwhile the second component 200 is also fixed in the gripping part 10, so as to avoid an axial movement of the second component 200. Definitely, the second through holes 14a and 14b herein can also be understood as threaded holes, and in this case such screwing parts as a bolt or a screw can be further used for fastening.

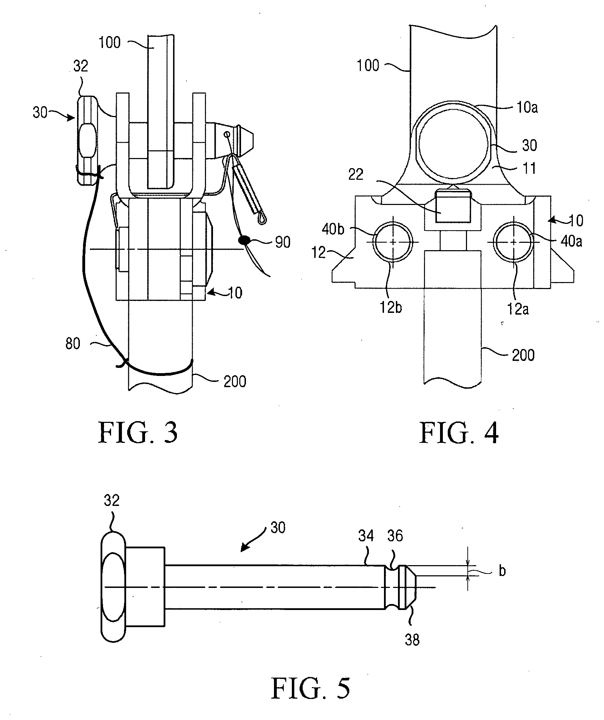

As shown in FIG. 5, the connection part 30 has a fixing end 32 and a free end 34, and the first component 100 and the gripping part 10 are fixed through the first through holes (13a, 13b). A diameter of the fixing end 32 is larger than that of the first through holes (13a, 13b), and a diameter of the free end 34 extending along the fixing end 32 is not larger than that of the first through holes (13a, 13b), so the fixing end 32 is limited to be out of the first through hole 13a to plays a fixing role.

As an implementation, the diameter of the free end 34 of the connection part 30 decreases gradually along an axial direction, that is to say, an end 38 of the free end 34 of the connection part has a cone frustum or cone shape, so that the connection part 30 can be conveniently inserted into the first through holes (13a, 13b) or be drawn out from the first through holes (13a, 13b), particularly, an inclined surface with a distance b in a direction which is vertical to the axis of the connection part is provided on the end of the free end of the connection part.

As shown in FIG. 3, in order to avoid an improper operation, a locking device 90 capable of being unlocked such as a lead seal and a plastic sealing tape can be further disposed at the free end 34 of the connection part, only after the locking device 90 is unlocked through methods such as damage, the connection part 30 can be drawn out.

In order to prevent the connection part 30 drawn out from being lost, the fixing end 32 of the connection part can be further connected to the first component 100, the second component 200, or the gripping part 10 through a fixing device 80. For example, the fixing end 32 is connected to the second component 200 through such devices as a rope and a chain. Even if the connection part 30 is drawn out from the first through holes (13a, 13b), the connection part is not lost accidentally.

As a replacement solution or a supplement solution, an elastic part (not shown) such as a spring ring can be further sleeved on the connection part 30. When the elastic part is sleeved on a portion of the connection part which is located in the space formed between the first through holes (13a, 13b) and is close to the fixing end 32, and the connection part is drawn out from the first through hole 13a, the hole 110 on the first component, and the first through hole 13b, the elastic part can be further continuously sleeved on the connection part 30, so as to effectively prevent the connection part 30 from being lost accidentally.

In order to prevent the connection part 30 from falling off accidentally in an axial direction, one fixing part 20 can be further disposed, to limit the axial movement of the connection part 30, so the connection part 30 is fixed on a predetermined position.

To this end, a through slot (only a through slot 18a at one side is shown in FIG. 6) is opened between the first connection portion 11 and the second connection portion 12 of the gripping part 10, and the fixing part 20 passes through this through slot, one end 22 is fixed on the gripping part 10, and the other end 24 is used to limit an axial movement of the connection part 30.

Preferably, the fixing part 20 can be a plate spring or other elastic components. The fixing part has an elastic protrusion 26 for withstanding the free end 34 of the connection part 30, so as to limit the axial movement of the connection part 30. In order to make the fixing effect more apparent, at least one groove 36 can be opened on the free end 34 of the connection part 30, and when at least a portion of the elastic protrusion 26 is stretched into the groove 36, the axial movement of the connection part 30 is limited due to obstruction of the groove 36.

Furthermore, the fixing part 20 can further play a positioning role. In order to make connection of the first component 100 more convenient, it is only needed to design a position of the through slot 18a properly. When the one end 22 of the fixing part is fixed on the gripping part 10, and as long as an end of the first component 100 contacts the portion of the fixing part 20 located in the space formed between the first through holes (13a, 13b), it is denoted that the first through holes (13a, 13b) and the hole 110 on the first component are at least basically at the same axis line. Furthermore, in order to draw out or insert the connection part 30 conveniently, it is advantageously that the distance a between an end of the first component 100 and the fixing part 20 is less than the distance b of an inclined surface of the free end 34 of the connection part 30 in a direction which is vertical to the axis of the connection part 30.

When it is needed to draw out the connection part 30, the elastic protrusion 26 on the fixing part 20 can be pressed to draw out the connection part 30 from the groove 36. As the axial obstruction does not exist anymore, and if a lateral force is applied at the fixing end 32 of the connection part 30, the connection part 30 can be easily drawn out, and thus preventing the connection part 30 from falling off accidentally due to such factors as vibration.

In another embodiment of the present invention, the gripping part can be further used as an integral structure, which requires that the two connected components are adapted to the internal structure of the gripping part.

Hereinafter, an assembly and disassembly process of the connection mechanism according to the present invention is introduced with reference to FIG. 6.

During the assembly, the gripping part 10 can be made to firstly grip the second component 200, and then the gripping part 10 and the second component 200 are fixed with the screws 40. The fixing part 20 is inserted into the through slot (only the through slot 18a at the one end is shown in FIG. 6), one end of the fixing part 20 is folded and then is fixed on the gripping part 10, and the other end is equipped with the elastic protrusion 26. The first component 100 is stretched into the space formed by the gripping part 10, and when an end of the first component 100 contacts the fixing part 20, it is implied that the first component 100 is positioned, and the connection part 30 passes through the first through hole 13a, the hole 110 on the second component, and the first through hole 13b, so as to connect the gripping part 10 and the first component 100. The elastic protrusion 26 of the fixing part 20 is pressed, so that the elastic protrusion 26 is penetrated deeply into the groove 36 on the free end 34 of the connection part, so as to fix the connection part 30, then fix the first component 100, and lock a locking device (if any) at the free end. So far, a process that the gripping part 10 is connected with the first component 100 and the second component 200 is completed.

During the disassembly, firstly the locking device (if any) is unlocked, and the elastic protrusion 26 is pressed with a finger or other objects, so that the elastic protrusion 26 is withdrawn from the groove 36, and the connection part 30 can be drawn out, so as to complete separation of the second component 200 from the first component 100.

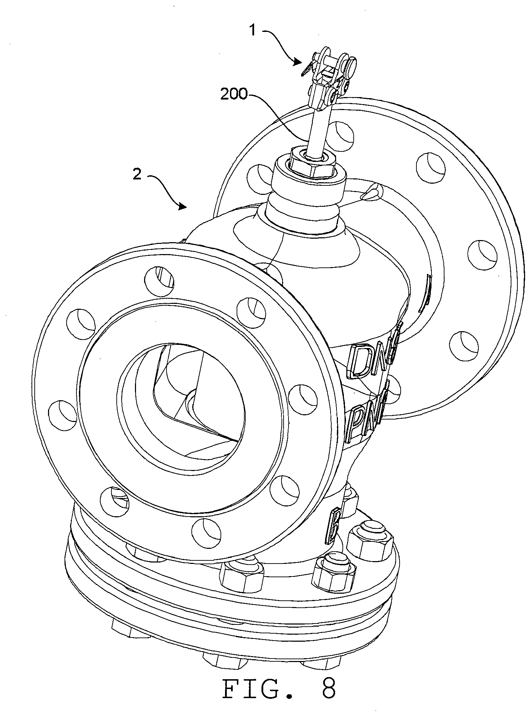

As shown in FIG. 8, the present invention further provides a valve 2, and a connection mechanism 1 is connected onto a valve rod 200 of the valve 2, but not mounted on an output shaft of an actuating mechanism.

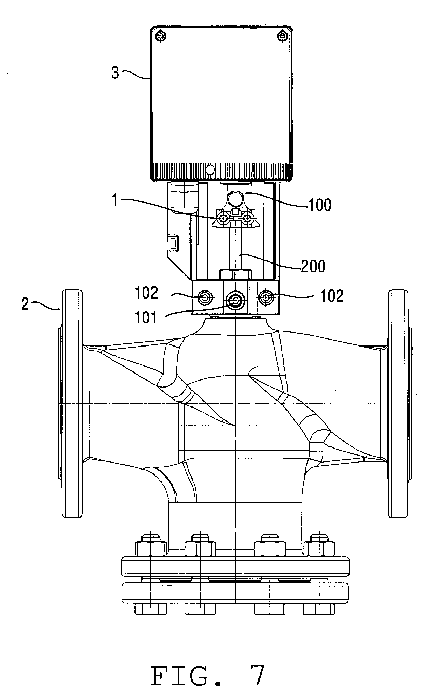

As shown in FIG. 7, the present invention further provides an actuating mechanism 3. The actuating mechanism 3 has an output shaft 100, a long hole (not shown in FIG. 7) is opened on an output shaft 100, and connection with the connection mechanism 1 can be realized through this long hole.

As shown in FIG. 6, the long hole 110 makes it possible that the gripping part 10 could have a freedom to move in the direction of Y-Y. Particularly, when an extending direction of the long hole 110 is vertical to an axial direction (i.e., the direction of Y-Y) of a connection part 30 of a connection structure (not shown in FIG. 7), it offers the possibility of a limited freedom of movement in the direction of X-X, and even if the output shaft 100 of the actuating mechanism 3 and the valve rod 200 of the valve are not on one straight line, the connection part can also easily pass through the first through holes (not shown in FIG. 7) and the long hole on the output shaft, and a lateral stress is not generated. Furthermore, a limited rotation of the gripping part 10 in the direction of Z-Z is guaranteed due to the shape of the long hole 110 and the connection with the valve plug 200. It is the long hole 110 that increases the freedom of movement of the actuating mechanism 3 relative to the valve plug 200. Hence, the performance on the movement of different positions of the actuating mechanism 3 is improved.

Hereinafter, the connecting process of the actuating mechanism 3 according to the present invention with the valve 2 according to the present invention is introduced with reference to FIG. 2, 5 and 7.

Firstly, place the first component 100 on the second component 200 and connect them by the positioning screw 101;

Then, move the second component 100 and the fixing part 20 to the correct mechanical stop position. Move in the connection part 30 and lock it with the fixing part 20, since the dimension b > a, a simple and quick connection of first and second components is possible.

Finally fix the first component 100 on the second component 200 by the fixing screws 102 and tighten the positioning screw 101.

## Claims

1. A connection mechanism (1), for connecting a first component (100) and a second component (200), comprising a gripping part (10), a connection part (30), and a fixing part (20), wherein
the gripping part (10) has a first connection portion (11) and a second connection portion (12), a pair of first through holes (13a, 13b) are disposed symmetrically on the first connection portion (11), and a through slot (18a, 18b) is disposed symmetrically between the first connection portion (11)and the second connection portion (12);
the connection part (30) has a free end (34) and a fixing end (32), and the free end (34)passes through the first through holes (13a, 13b), so as to limit a radial movement of the connection part (30); and
the fixing part (20) passes through the through slot (18a, 18b), one end of the fixing part (20) is fixed on the gripping part (10), and the other end of the fixing part (20) is used to limit an axial movement of the connection part (30).

2. The connection mechanism (1) according to claim 1, further comprising an elastic part sleeved on the connection part (30).

3. The connection mechanism (1) according to claim 1 or 2, wherein a pair of second through holes (14a, 14b) are disposed symmetrically on the second connection portion (12).

4. The connection mechanism (1) according to claim 1 or 2, wherein the fixing part (20) has an elastic protrusion (26) for with standing the free end (34) of the connection part (30), so as to limit the axial movement of the connection part (30).

5. The connection mechanism (1) according to claim 4, wherein the free end (34) of the connection part (30) has at least one groove (36), and when at least a portion of the elastic protrusion (26) is stretched into the groove (36), the axial movement of the connection part (30) is limited.

6. The connection mechanism (1) according to claim 1 or 2, wherein a diameter of the free end (34) of the connection part (30) decreases gradually along an axial direction.

7. The connection mechanism (1) according to claim 1 or 2, wherein the free end (34) of the connection part (30) further has a locking device (90) capable of being unlocked.

8. The connection mechanism (1) according to claim 1 or 2, wherein the fixing end (32) of the connection part (30) is connected with a fixing device (80), and the fixing device (80) is connected to the first component (100), the second component (200), or the gripping part (10).

9. The connection mechanism (1) according to claim 1 or 2, wherein the gripping part (10) is detachable.

10. The connection mechanism (1) according to claim 1 or 2, wherein when the first component (100) is connected through the connection part (30), a distance (a) between an end of the first component (100) and the fixing part (30) is less than a distance (b) of an inclined surface of an end (38) of the free end (34) of the connection part (30) in a direction which is vertical to the axis of the connection part (30).

11. A valve (2), having a valve rod (200), wherein the connection mechanism (1) according to any one of claims 1 to 10 is connected to the valve rod (200).

12. A combination of a connection mechanism (1) according to any one of claims 1 to 10 and an actuating mechanism (3) comprising an output shaft (100), wherein a long hole (110) is disposed on the output shaft (100), and is used to connect the connection part (30) of the connection mechanism (1).

## Patentansprüche

1. Verbindungsmechanismus (1) zum Verbinden einer ersten Komponente (100) mit einer zweiten Komponente (200), wobei der Verbindungsmechanismus (1) ein Greifteil (10), ein Verbindungsteil (30) und ein Fixierteil (20) umfasst, wobei
das Greifteil (10) einen ersten Verbindungsabschnitt (11) und einen zweiten Verbindungsabschnitt (12) aufweist, wobei ein Paar erste Durchgangsbohrungen (13a, 13b) symmetrisch an dem ersten Verbindungsabschnitt (11) und ein Durchgangsschlitz (18a, 18b) symmetrisch zwischen dem ersten Verbindungsabschnitt (11) und dem zweiten Verbindungsabschnitt (12) angeordnet ist,
das Verbindungsteil (30) ein freies Ende (34) und ein Fixierende (32) aufweist und das freie Ende (34) so durch die ersten Durchgangsbohrungen (13a, 13b) hindurch verläuft, dass es eine radiale Bewegung des Verbindungsteils (30) einschränkt, und
das Fixierteil (20) durch den Durchgangsschlitz (18a, 18b) hindurch verläuft, wobei ein Ende des Fixierteils (20) an dem Greifteil (10) fixiert ist und das andere Ende des Fixierteils (20) zum Einschränken einer axialen Bewegung des Verbindungsteils (30) verwendet wird.

2. Verbindungsmechanismus (1) nach Anspruch 1, der ferner ein elastisches Teil umfasst, der auf das Verbindungsteil (30) aufgezogen ist.

3. Verbindungsmechanismus (1) nach Anspruch 1 oder 2, wobei ein Paar zweite Durchgangsbohrungen (14a, 14b) symmetrisch an dem zweiten Verbindungsabschnitt (12) angeordnet ist.

4. Verbindungsmechanismus (1) nach Anspruch 1 oder 2, wobei das Fixierteil (20) einen elastischen Vorsprung (26) aufweist, der so gegen das freie Ende (34) des Verbindungsteils (30) hält, dass die axiale Bewegung des Verbindungsteils (30) eingeschränkt ist.

5. Verbindungsmechanismus (1) nach Anspruch 4, wobei das freie Ende (34) des Verbindungsteils (30) mindestens eine Nut (36) aufweist und, wenn zumindest ein Abschnitt des elastischen Vorsprungs (26) in die Nut (36) hineinreicht, die axiale Bewegung des Verbindungsteils (30) eingeschränkt wird.

6. Verbindungsmechanismus (1) nach Anspruch 1 oder 2, wobei sich ein Durchmesser des freien Endes (34) des Verbindungsteils (30) in einer axialen Richtung allmählich verringert.

7. Verbindungsmechanismus (1) nach Anspruch 1 oder 2, wobei das freie Ende (34) des Verbindungsteils (30) ferner eine Verriegelungsvorrichtung (90) aufweist, die sich entriegeln lässt.

8. Verbindungsmechanismus (1) nach Anspruch 1 oder 2, wobei das Fixierende (32) des Verbindungsteils (30) mit einer Fixiervorrichtung (80) und die Fixiervorrichtung (80) mit der ersten Komponente (100), der zweiten Komponente (200) oder dem Greifteil (10) verbunden ist.

9. Verbindungsmechanismus (1) nach Anspruch 1 oder 2, wobei das Greifteil (10) abnehmbar ist.

10. Verbindungsmechanismus (1) nach Anspruch 1 oder 2, wobei, wenn die erste Komponente (100) über das Verbindungsteil (30) verbunden ist, ein Abstand (a) zwischen einem Ende der ersten Komponente (100) und dem Fixierteil (30) in einer Richtung, die vertikal zur Achse des Verbindungsteils (30) verläuft, geringer ist als ein Abstand (b) einer schrägen Fläche eines Endes (38) des freien Endes (34) des Verbindungsteils (30).

11. Ventil (2) mit einer Ventilstange (200), wobei der Verbindungsmechanismus (1) nach einem der Ansprüche 1 bis 10 mit der Ventilstange (200) verbunden ist.

12. Kombination aus einem Verbindungsmechanismus (1) nach einem der Ansprüche 1 bis 10 und einem Betätigungsmechanismus (3) mit einer Abtriebswelle (100), wobei ein Langloch (110) an der Abtriebswelle (100) angeordnet ist und zum Verbinden des Verbindungsteils (30) des Verbindungsmechanismus (1) verwendet wird.

## Revendications

1. Mécanisme de raccordement (1) pour raccorder un premier composant (100) et un deuxième composant (200), comprenant une pièce de préhension (10), une pièce de raccordement (30) et une pièce de fixation (20), dans lequel
la partie de préhension (10) présente une première partie de raccordement (11) et une deuxième partie de raccordement (12), une paire de premiers trous traversants (13a,13b) sont disposés symétriquement sur la première partie de raccordement (11), et une fente traversante (18a,18b) est disposée symétriquement entre la première partie de raccordement (11) et la deuxième partie de raccordement (12);
la pièce de raccordement (30) présente une extrémité libre (34) et une extrémité de fixation (32), et l'extrémité libre (34) passe à travers les premiers trous traversants (13a, 13b) de manière à limiter un mouvement radial de la pièce de raccordement (30); et
la pièce de fixation (20) passe à travers la fente traversante (18a, 18b), une extrémité de la pièce de fixation (20) est fixée sur la pièce de préhension (10), et l'autre extrémité de la pièce de fixation (20) est utilisée pour limiter un mouvement axial de la pièce de raccordement (30).

2. Mécanisme de raccordement (1) selon la revendication 1, comprenant en outre une pièce élastique emmanchée sur la pièce de raccordement (30).

3. Mécanisme de raccordement (1) selon la revendication 1 ou 2, dans lequel une paire de deuxièmes trous traversants (14a, 14b) sont disposés symétriquement sur la deuxième partie de raccordement (12).

4. Mécanisme de raccordement (1) selon la revendication 1 ou 2, dans lequel la pièce de fixation (20) a une saillie élastique (26) pour résister à l'extrémité libre (34) de la pièce de raccordement (30) de manière à limiter le mouvement axial de la pièce de raccordement (30).

5. Mécanisme de raccordement (1) selon la revendication 4, dans lequel l'extrémité libre (34) de la pièce de raccordement (30) présente au moins un sillon (36) et quand au moins une partie de la saillie élastique (26) s'étend dans le sillon (36), le mouvement axial de la pièce de raccordement (30) est limité.

6. Mécanisme de raccordement (1) selon la revendication 1 ou 2, dans lequel le diamètre de l'extrémité libre (34) de la pièce de raccordement (30) diminue graduellement le long de la direction axiale.

7. Mécanisme de raccordement (1) selon la revendication 1 ou 2, dans lequel l'extrémité libre (34) de la pièce de raccordement (30) a en outre un dispositif de blocage (90) pouvant être débloqué.

8. Mécanisme de raccordement (1) selon la revendication 1 ou 2, dans lequel l'extrémité libre (32) de la pièce de raccordement (30) est raccordée à un dispositif de fixation (80), et le dispositif de fixation (80) est raccordé au premier composant (100), au deuxième composant (200) ou à la pièce de préhension (10).

9. Mécanisme de raccordement (1) selon la revendication 1 ou 2, dans lequel la pièce de préhension (10) est détachable.

10. Mécanisme de raccordement (1) selon la revendication 1 ou 2, dans lequel quand le premier composant (100) est raccordé par la pièce de raccordement (30), la distance (a) entre une extrémité du premier composant (100) et la pièce de fixation (30) est inférieure à la distance (b) d'une surface inclinée d'une extrémité (38) de l'extrémité libre (34) de la pièce de raccordement (30) dans une direction verticale à l'axe de la pièce de raccordement (30).

11. Soupape (2) possédant une tige de soupape (200), dans laquelle le mécanisme de raccordement (1) selon l'une quelconque des revendications 1 à 10 est raccordé à la tige de soupape (200).

12. Combinaison d'un mécanisme de raccordement (1) selon l'une quelconque des revendications 1 à 10 et d'un mécanisme d'actionnement (3) comprenant un arbre de sortie (100), dans lequel un trou long (110) est disposé sur l'arbre de sortie (100) et est utilisé pour raccorder la pièce de raccordement (30) du mécanisme de raccordement (1).
